# EUROPEAN PATENT APPLICATION

(11) **EP 1 145 762 A1**
(43) Date of publication of application: **17.10.2001**
(21) Application number: 01108372.2
(22) Date of filing: 03.04.2001
(51) Int. Cl.: B01J 23/22, B01D 53/94

(54) **Process for the preparation of a vanadia SCR-catalyst supported on titania**

(30) Priority: 11.04.2000 EP 00107727
(71) Applicant: dmc2 Degussa Metals Catalysts Cerdec AG, 60287 Frankfurt am Main (DE)
(72) Inventor: Schäfer-Sindlinger, Adolf, Dr., 60488 Frankfurt (DE); Burkardt, Armin, 63755 Alzenau (DE); Van den Tillaart, Hans, Dr., 5871 C Broekhuizenvorst (NL); Kreuzer, Thomas, Dr., 61184 Karben (DE); Lox, Egbert, Dr., 63457 Hanau (DE); Weisweiler, Werner, Prof., 750196 Remchingen-Singen (DE)

(57) **Abstract**

The invention concerns a process for the preparation of a vanadia SCR-catalyst supported on titania. The process is characterised in that the catalyst is prepared by dispersing titania in an ammonium metavanadate (NH₄VO₃) solution, adjusting the pH of the solution to a value of 7.0 - 7.1 by NH₄OH and HNO₃, stirring the resulting suspension for a time sufficient for complete adsorption of the vanadium compound on titania, filtering the suspension and drying and calcining the resulting catalyst compound.

## Description

The present invention concerns an improved process for the preparation of a vanadia SCR-catalyst supported on titania.

In view of the US 2002/2004 and EU IV/V legislation, the major concern of exhaust gas aftertreatment for the future heavy duty diesel vehicles is reducing the NOₓ and/or particulate emissions. At the same time fuel efficiency is a major engineering target as the end users will see a clear effect on their operation costs. A fuel efficient operation gives high NOₓ raw emissions and low particulate emissions. To reduce the NOx emission an efficient aftertreatment system is needed. The SCR (Selective Catalytic Reduction) exhaust gas aftertreatment system using urea as reductant has a high NOₓ reduction potential. Especially supported vanadium oxide catalysts have been widely investigated in recent years as they represent an important group of highly active catalysts for the selective catalytic reduction of NO to N₂ with NH₃. The results of activity measurements (I. Georgiadou, Ch. Papadopoulou, H.K. Matralis, G.A. Voyiatzis, A. Lycourghiotis, Ch. Kordulis, J. Phys. Chem., 102 (1998) 8459 and A. Burkardt, Diplomarbeit, Inst. f. Chem. Technik, Universität Karlsruhe (1998)) reveal a varying activity and selectivity for V₂O₅/TiO₂ catalysts resulting from both different preparation methods and varying vanadia loading. Different surface vanadia structures with varying catalytic properties were supposed to be responsible for the observed effects. According to Topsoe *et. al.* (N.-Y. Topsøe, CatTech, Vol 1 (1997) 125 and J.A. Dumesic, N.-Y. Topsøe, H. Topsøe, Y. Chen, T. Slabiak, J. Catal., 163 (1996) 409 ) the existence of both a V-OH Brønsted site and an adjacent V=O redox site are necessary for a selective reduction of NO to N₂. IR studies with ammonia revealed a direct correlation between the concentration of V-OH groups and the Brønsted acidity (N.-Y. Topsøe, H. Topsøe, J.A. Dumesic, J. Catal., 151 (1995) 22). Therefore the mentioned differences in activity/selectivity could be an effect of different surface vanadia structures with varying Brønsted acidities.

Both surface structure and active phase dispersion in supported vanadia catalysts were intensively studied by many different characterization methods such as Laser Raman spectroscopy, ⁵¹V MAS-NMR, V-K-XANES, XRD, XPS, TPR and by oxygen chemisorption methods in recent years. It turned out, that the results were not always in agreement. A different catalyst preparation with regard to the used method as well as the vanadium oxide precursor, varying active phase loading and the use of either a high or low surface area TiO₂ (anatase) could result in different observed vanadia structures. The combined results of these investigations suggest, that within the so called monolayer coverage the vanadia species are primarily present as isolated and polymerized VO₄ units anchored to the TiO₂ surface by strong interaction. However, the existence of surface VO₆ units may also be possible. At higher vanadia loading a disordered or even "paracrystalline V₂O₅" phase is assumed.

The object of the present invention is to supply a process for the preparation of vanadia-SCR catalysts on titania which yields reliably highly disperse and amorphous vanadia deposits on titania. As a result of these highly disperse and amorphous deposits the activity and aging stability of the catalyst is increased. In addition the catalyst reveals a higher selectivity than conventionally prepared catalysts.

This object is achieved by a process for the preparation of a vanadia SCR-catalyst supported on titania, characterised in that the catalyst is prepared by dispersing titania in an ammonium metavanadate (NH₄VO₃) solution, adjusting the pH of the solution to a value of 6.8 - 7.3 by NH₄OH and HNO₃, stirring the resulting suspension for a time sufficient for complete adsorption of the vanadium compound on titania, filtering the suspension and drying and calcining the resulting catalyst compound.

It was found that this adsorption procedure leads to highly disperse and amorphous deposits of vanadia on titania. Especially important is the precise control of the pH-value of the suspension in the interval between 6.8 and 7.3, preferably between 7.0 and 7.1. The suspension of titania in the solution of ammonium metavanadate is stirred until the adsorption of the ammonia compound on titania is complete. The adsorption proceeds slowly and may take 24 to 50 hours. The completion of the adsorption can be easily controlled by watching the change in color of the suspension. At the start the suspension is yellow. As the adsorption proceeds the color fades away. Alternatively the completion of the adsorption process may be monitored by analyzing repeatedly the ammonium metavanadate content of the liquid phase of the suspension.

### Example:

Five supported vanadia on titania (WOₓ stabilized anatase) catalysts with the following loading of V₂O₅ were manufactured:
a) 1.2 wt.-% V₂O₅/TiO₂
b) 2.3 wt.-% V₂O₅/TiO₂
c) 2.5 wt.-% V₂O₅/TiO₂
d) 3.4 wt.-% V₂O₅/TiO₂
e) 4.6 wt.-% V₂O₅/TiO₂

The titania support material was dispersed in a solution of ammonium metavanadate (NH₄VO₃). The pH of the resulting suspension was adjusted to a value of 7.0 - 7.1 by NH₄OH and HNO₃. After 48 h of stirring the suspension was filtered . The wet catalyst sample was dried at 333 K for 24 h and then calcined in air at 773 K for 2 h.

The catalyst powders were coated on substrates. The catalysts thus obtained were thoroughly investigated for their various properties as given below.

### Activity and selectivity:

Activity and selectivity of the catalysts were measured under stationary conditions in a temperature range of 423 K to 773 K. Unless otherwise reported, the standard gas composition given in table 1 was used with a space velocity of 30.000 h⁻¹.

**Table 1:**

| Composition of the gas mixture used in the model gas experiments | | | | | |
|---|---|---|---|---|---|
| Component | NO | NH₃ | O₂ | H₂O | N₂ |
| [Vol.-ppm] | 500 | 450 | 5000 | 13000 | Balance |

Both inlet and outlet gases were analyzed by a FTIR spectrometer. The temperature (443 K) and the pressure (1080 mbar) in the used gas cell were kept at a constant level. To minimize problems with H₂O in the quantitative FTIR gas analysis the water concentration was kept at a relatively low level of 1.3 vol.-%. Typically, diesel exhaust gas contains 6 vol.-% water. However, above H₂O concentrations of about 0.5 vol.-% no effect on the catalytic reaction is observed other than a dilution effect.

### Laser Raman Studies:

The Laser Raman Spectroscopy (LRS) was done using a BRUKER RFS 100. The hydrated samples were measured in the standard sample holder at room temperature in air. The dehydrated samples were prepared ex-situ, stored and measured in an argon atmosphere using a quartz glass reactor.

### Nuclear Magnetic Resonance Studies:

⁵¹V-MAS solid-state NMR measurements were carried out at 65,8 MHz (5,87 T) on a Bruker AM-250 spectrometer, equipped with a 7 mm double bearing MAS probe (zirconia spinners). The magic angle was set to 54,7°. To differentiate the main peak from spinning side bands, the measurements were obtained at least at two sample spinning speeds in the range of 3 to 5 kHz. The isotropic chemical shifts were determined from the position of the main peak, which does not change with the sample spinning speed. The chemical shift is expressed in terms of the δ scale with respect to V₂O₅ as an external reference with δ = - 609 ppm (H. Eckert, I.E. Wachs, J. Phys. Chem., 93 (1989) 6796).

### XANES Studies:

X-Ray Absorption Near Edge Structure (XANES) measurements were performed at the Synchrotronstrahlungslabor HASYLAB at DESY, Hamburg, Germany.

The spectra at the V K-edge (5464 eV) were taken at beamline E4 using a Si(111) double crystal monochromator. Efficient rejection of higher harmonics was obtained by use of a Au coated focussing mirror together with a Ni coated plain mirror. During measurements the primary intensity was set to 70 % of the maximum Bragg peak intensity by means of a piezo stabilized feedback loop. All measurements were performed in vacuum at room temperature in transmission mode. A thin layer of catalyst powder (ca. 10 mg/cm²) enclosed between two layers of tape was used as sample. Simultaneously, the absorption of a V metal foil reference was measured to accurately define the energy scale. Background substraction of the spectra was done by substracting the fitted Victoreen of the pre-edge region from the energy corrected data. Due to the strong EXAFS signal of titanium at the vanadium K-edge of the samples with low vanadium loading, background substraction of these samples was done by substraction of the linear fit of the pre-edge region. Finally the spectra were normalized.

### Determination of the acidic sites with DRIFTS:

The measurements were done in a heatable DRIFTS cell with two variable gas inlets and one high vacuum connection. The sample (approx. 50 mg) was placed in the flat receptacle of the cell (10 mm diameter) and evacuated at 473 K for 30 minutes to dry the catalyst. After pyridine was added at room temperature the cell was evacuated at 423 K for 30 minutes to remove non adsorbed probe molecules. The I.R. spectra were recorded at room temperature.

### Measurement results:

The figures 1 to 14 show:
- **Figure 1:**: NOₓ conversion (left) and N₂O concentration (right) for model gas measurements as a function of temperature
- **Figure 2:**: NH₃ concentration for model gas measurements as a function of temperature
- **Figure 3:**: NOₓ conversion and gas outlet concentrations for model gas measurements of the 4.6 wt.-% V₂O₅/TiO₂ (left) and the 1.2 wt.-% V₂O₅/TiO₂ (right) catalyst with or without water in the feedgas
- **Figure 4:**: Laser-Raman spectra of anatase (---),
1.2 wt.-% V₂O₅/TiO₂ (a),
2.3 wt.-% V₂O₅/TiO₂ (b),
2.5 wt.-% V₂O₅/TiO₂ (c),
3.4 wt.-% V₂O₅/TiO₂ (d),
4.6 wt.-% V₂O₅/TiO₂ (e)
- **Figure 5:**: Laser-Raman spectra the of 4.6 wt.-% V₂O₅/ TiO₂ catalyst: hydrated (a), 45 min 573 K (b), 573-773 K β = 5 K/min (c), 45 min 500 K (d), anatase/ hydrated (―), anatase/dehydrated 45 min 773 K (---)
- **Figure 6:**: ⁵¹V MAS-NMR spectra of the hydrated and dehydrated 4.6 wt.-% V₂O₅/TiO₂ catalyst sample and the model compound V₂O₅. The center bands are indicated by an asterisk.
- **Figure 7:**: ⁵¹V MAS-NMR spectra of the 2.5 and 1.2 wt.-% V₂O₅/TiO catalyst samples and the model compound Na₆V₁₀O₂₈. The center bands are indicated by an asterisk.
- **Figure 8:**: Vanadium K edge XANES of the 4.6 wt.-% V₂O₅/TiO₂ catalyst sample in a hydrated and dehydrated state together with two reference compounds
- **Figure 9:**: Vanadium K-edge XANES of the 1.2 wt.-% V₂O₅/TiO₂ catalyst sample together with two reference compounds
- **Figure 10:**: I.R. spectra of pyridine absorbed on the 4.6 wt.- % and 1.2 wt.-% V₂O₅/TiO₂ catalyst sample followed by 30 minutes evacuation at 323 K
- **Figure 11:**: Crystallographic matching between a (010) V₂O₅ plane and the (001) anatase surface. Two representative bridging V-O-V groups being possibly replaced by two V-OH groups upon hydration are marked by an asterisk.
- **Figure 12:**: Postulated vanadia species anchored to the (001) anatase TiO₂ plane consisting of isolated (a) or polymerized (b) VO₄ units
- **Figure 13:**: Two dimensional vanadia species consisting of polymerized VO₄ units
- **Figure 14:**: Polymerized V₃O₉ clusters consisting of three edge combined square pyramidal vanadia units

### Activity measurements with water in feedgas:

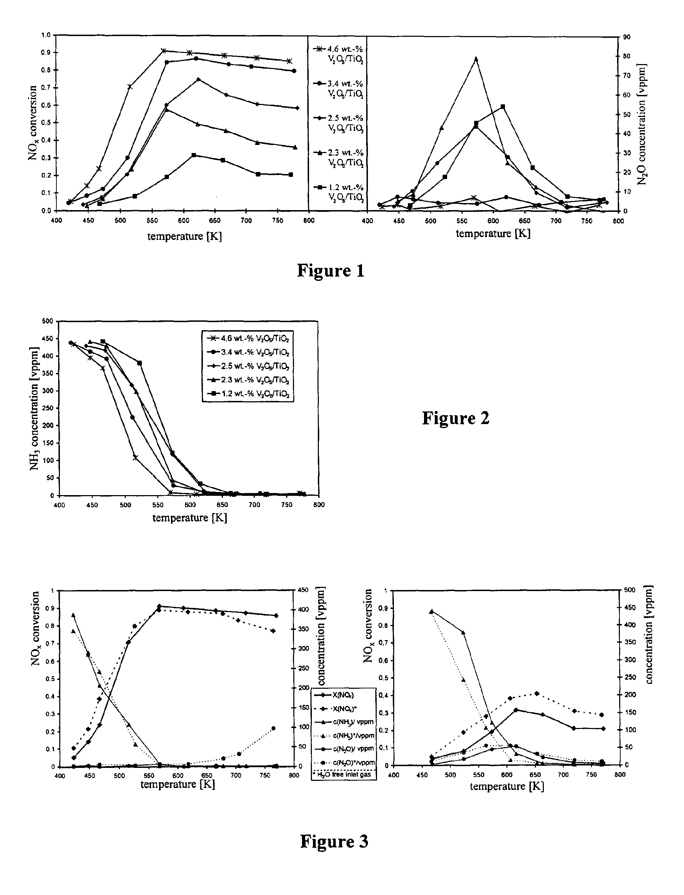

Figure 1 shows the NOₓ conversion and N₂O concentration in the model gas experiments for the various V₂O₅ loadings as a function of temperature.

The catalysts with a V₂O₅ loading above 3 wt.-% show a high NOₓ conversion above 550 K and a high selectivity to N₂. With decreasing V₂O₅ concentration the NOₓ conversion decreases. At lower temperatures (< 500 K) this decreased activity is due to the decreased activity of the SCR reaction as both the NO and the NH₃ conversion are reduced to the same extent (Fig. 1,2). However, at higher temperatures (> 600 K) a complete conversion of ammonia is observed (Fig. 2). The NOₓ conversion level is relatively low and can be attributed to the partial oxidation of NH₃ to NOₓ. N₂O is preferentially formed in a temperature range between 500 and 700 K. This leads to the observed low selectivity.

### Activity measurements without water in the feedgas:

Figure 3 shows the NOₓ conversion and gas outlet concentrations as a function of temperature for two differently loaded catalysts with and without water in the inlet gas. However, as water is one of the products of the SCR reaction and its side reactions, an absolute water free atmosphere can never be achieved.

The selectivity of the 4.6 wt.-% V₂O₅/TiO₂ sample is clearly decreased in the absence of water at high temperatures (> 650 K). NH₃ is partially oxidized and a considerable amount of N₂O is formed. In contrast, the selectivity of the 1.2 wt.-% V₂O₅/TiO₂ sample is not influenced by the presence or absence of water. For this sample only a slightly increased activity can be observed.

### Laser-Raman spectroscopy:

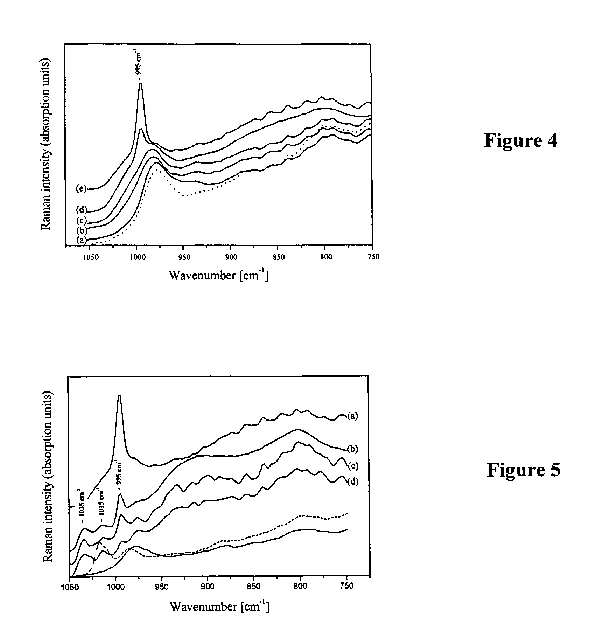

Figure 4 shows the Raman spectra of the different catalysts with V₂O₅ concentrations from 1.2 to 4.6 wt.-%. The broad band at 975 cm⁻¹, which is found in all spectra, can be assigned to tungsten oxide species present on the surface of the used WOₓ doped anatase TiO₂. At high vanadia loading (> 3 wt.-%) a sharp band at 995 cm⁻¹ is observed which can be assigned to the stretching mode of a surface monoxo vanadia species. At vanadia concentrations below 3 wt.-% this band disappears. This indicates that two different vanadia structures exist respectively at high and low active phase surface loading. The ν_{V=O} band found at higher vanadia concentrations accidentally coincides with the most intense band of crystalline V₂O₅. To discriminate between bulk oxide and surface vanadyl absorptions a measurement of the dehydrated sample is required.

Figure 5 shows the spectra of the 4.6 wt.-% V₂O₅/TiO₂ catalyst after dehydration in vacuum at different temperatures. The sharp band at 995 cm⁻¹ for the hydrated sample shifts to 1035 cm⁻¹ with increasing dehydration temperature. This excludes the presence of bulk V₂O₅ at the catalysts surface. The occurring band at 1015 cm⁻¹ can be assigned to dehydrated WOₓ surface species.

### Solid state ⁵¹V MAS-NMR:

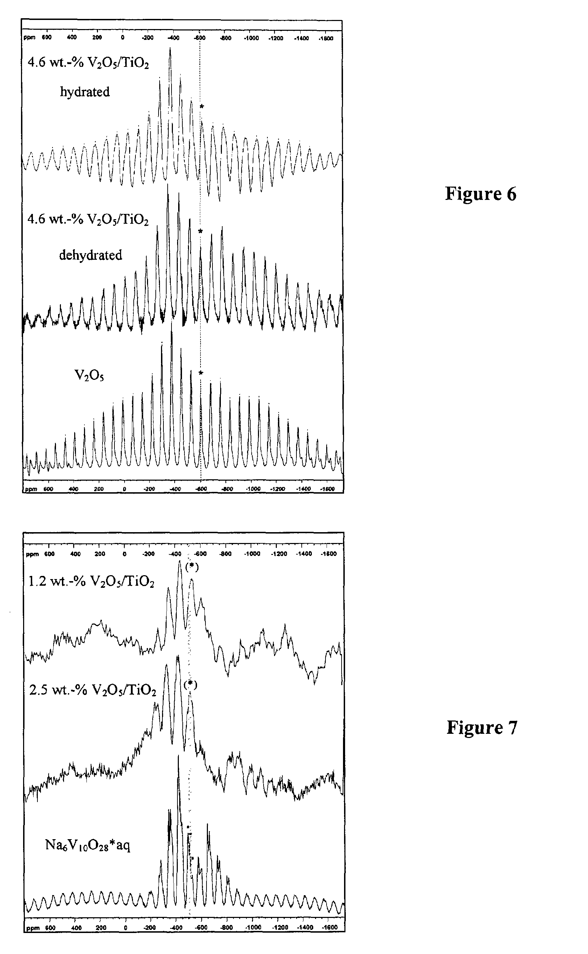

Figure 6 shows the spectra of the hydrated and dehydrated 4.6 wt.-% V₂O₅/TiO₂ sample and V₂O₅ as a reference. The clear MAS-NMR patterns observed for the sample signals in both hydrated and dehydrated form show the formation of a distinct, well defined vanadium (V) oxide species. The MAS-NMR side band patterns especially those of the dehydrated catalyst sample are strikingly similar to those observed for V₂O₅. Almost the same result was found by Fernandez and Guelton (C. Fernandez, M. Guelton, Catal. Today, 20 (1994) 77) for a V₂O₅/TiO₂ catalyst sample used within the Eurocat project. The position of the MAS center band positions is also quite similar, located at -609 ppm for V₂O₅, at -611 ppm for the dehydrated and at -624 ppm for the hydrated sample.

Figure 7 shows the spectra of samples with a V₂O₅ loading below 3 wt.-%. As a result of the strong background signal and the relative low vanadium concentration the patterns observed for the signals are not as well defined as for the highly loaded samples. Therefore the anisotropic chemical shift could only be roughly determined to a broad region at -500 ± 10 ppm. Nevertheless the spectra are quite similar to the spectrum of Na₆V₁₀O_{28*}aq for both the chemical shift and the MAS sideband patterns. In a ⁵¹V-NMR study done by Eckert and Wachs (H. Eckert, I.E. Wachs, J. Phys. Chem., 93 (1989) 6796) a very similar spectrum of a V₂O₅/TiO₂ catalyst sample was observed with a chemical shift determined at - 510 ± 10 ppm.

### XANES investigations:

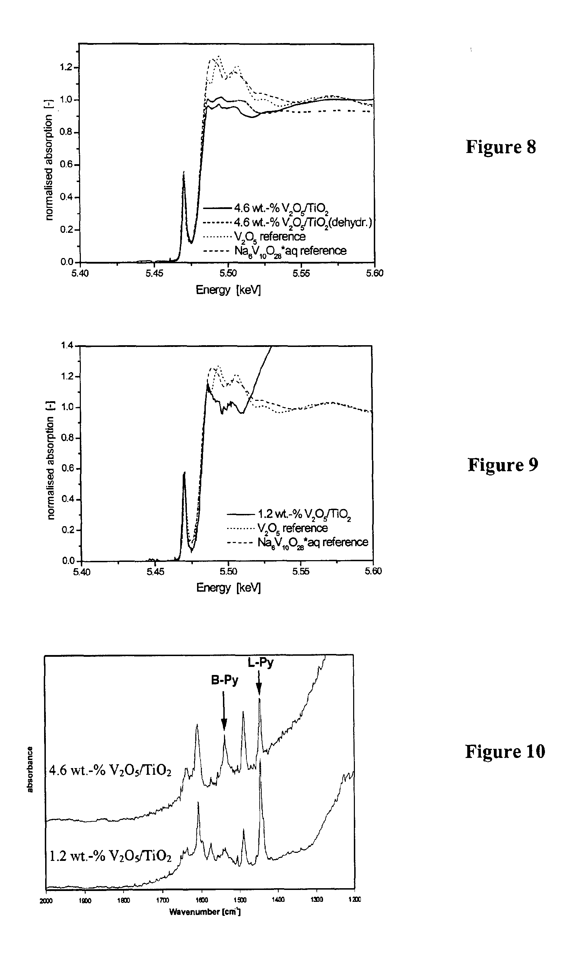

Absorption measurements were done for all catalyst samples. Both the highly and lowly loaded samples exhibit a prepeak which coincides in position and height to that of the shown references (Fig. 8,9) and is therefore attributed to a 5+ configuration of the V atoms. The near edge absorption fine structure of the 4.6 wt.-% V₂O₅/TiO₂ catalyst especially in the dehydrated state reveals a significant similarity to that of V₂O₅ (Figure 8). However, the XANES of the 1.2 wt.-% V₂O₅/TiO₂ sample shown in Figure 9 is more comparable to that of Na₆V₁₀O_{28*}aq. This result is in good agreement with the FT-Raman and ⁵¹V Solid State MAS-NMR studies shown before.

### Measurement of the acidic properties with DRIFTS:

Figure 10 shows the I.R. spectra of pyridine adsorbed on two different catalysts samples after evacuation at 323 K. The bands at 1602 , 1572, 1484 and 1442 cm⁻¹ can be assigned to the vibrational modes of Lewis-coordinated pyridine (L-Py). The bands at 1636, 1578 and 1537 cm⁻¹ being assigned to the corresponding modes of the pyridinium ion (B-Py). The 1537 and 1442 cm⁻¹ bands are characteristic of B-Py and L-Py, respectively. The intensity ratio of Brønsted to Lewis acid sites varies with the vanadia loading.

Whereas for the 1.2 wt.-% V₂O₅/TiO₂ sample the number of Brønsted sites is comparatively low, the B-Py to L-Py ratio for the highly loaded sample is about 1. This result might explain the different catalytic properties for the studied catalysts with either a high or low vanadia loading as both a V-OH site and an adjacent V=O redox site are necessary for the selective catalytic reduction.

### Results:

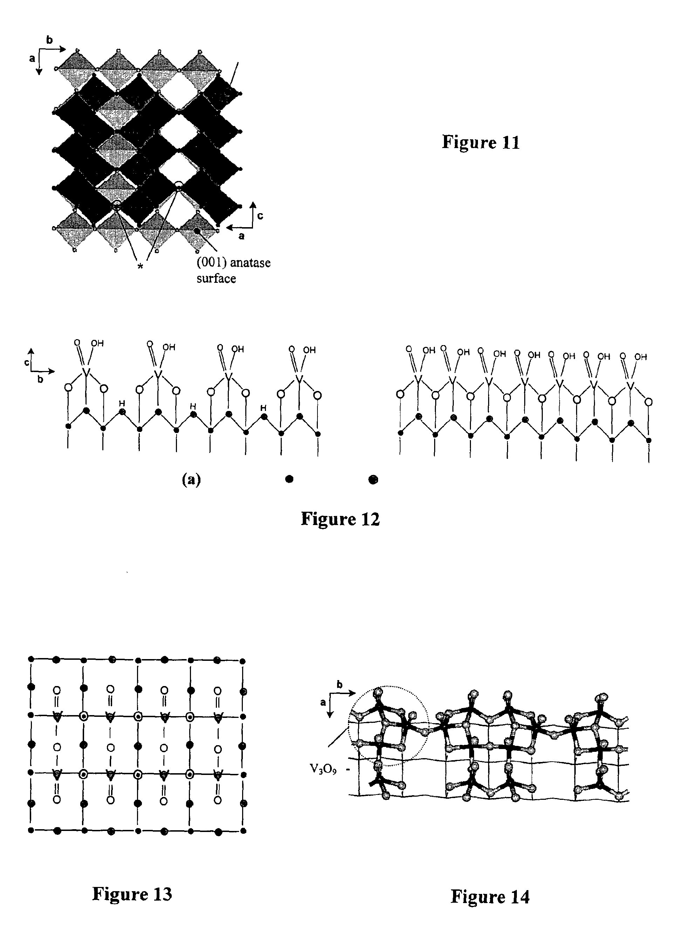

The results of the vanadia characterization studies indicate that two different highly dispersed and homogenous vanadium oxide species can exist as a submonolayer or monolayer phase. At V₂O₅ loadings above 3 wt.-% V₂O₅ a vanadia structure with a V₂O₅ like coordination was determined. As the maximum V₂O₅ concentration using the adsorption method is about 4.6 wt.-% a more or less complete vanadia monolayer is postulated for this sample. As there is a certain degree of crystallographic fit between the (010) plane of bulk V₂O₅ and the (001) plane of anatase TiO₂ a highly dispersed monolayer vanadia phase with a structure similar to a single (010) plane of V₂O₅ can be assumed (Fig. 11). However, such a two dimensional V₂O₅ phase dispersed on anatase TiO₂ would contain a certain amount of tension due to a small misalignment of the structural parameters of this vanadia phase and the (001) anatase TiO₂ plane. A hydrated structure where one bridging V-O-V group is replaced by two V-OH groups is probably more stable. In this postulated phase a V-OH site is adjacent to a V=O site resulting in a high catalytic activity and selectivity. Upon dehydration a structure with a complete two dimensional (010) V₂O₅ plane would be formed. The results of the ⁵¹V-NMR and XANES measurements revealing a vanadium coordination exactly like bulk V₂O₅ in the dehydrated state support this assumption. By the shift of the Raman band assigned to the ν_{V=O} monoxo stretching mode the structural change upon dehydration becomes apparent and at the same time the existence of crystalline V₂O₅ is excluded. As the dehydration is accompanied by a lower concentration of V-OH groups the catalytic selectivity is reduced as observed from the NOₓ conversion in the model gas measurements without water at high temperatures.

At a vanadia loading below 3 wt.-% a different vanadium oxide structure exists on the anatase TiO₂ surface. This structure has a lower number of Brønsted sites and shows a low selectivity in the selective catalytic reaction. The results of the characterization indicates the presence of vanadia species with a square pyramidal coordination as for example in Na₆V₁₀O_{28*}aq or Zn(VO₃)₂. This vanadium oxide species could consist of isolated or polymerized VO₄ units with one terminal V=O bond anchored to the (001) anatase TiO₂ surface by strong interaction (Fig.12). In this case a vanadium (V) would occupy roughly the position of another Ti⁴⁺ in the bulk anatase TiO₂ structure. This would result in an almost perfect balance of the local charges on the (001) anatase plane being +2/3 on Ti⁴⁺ and -2/3 on an unsaturated oxygen. However, a two-dimensional vanadia phase with two V-OH groups replaced by a bridging V-O-V bond (Fig. 13) accompanied by a small amount of Brønsted acid sites would be a better explanation for the low catalytic activity/selectivity. Another possible vanadium oxide structure might contain isolated or polymerized V₃O₉ clusters consisting of three combined square pyramidal vanadia units (Fig. 14). The resulting vanadium coordination is rather comparable to that of the reference compound Na₆V₁₀O_{28*}aq. The formation of the assumed structure can be explained by adsorption on the (001) anatase TiO₂ surface of V₃O_{9*}aq ions probably existing in the precursor solution at the adjusted pH and concentration.

## Claims

1. Process for the preparation of a vanadia SCR-catalyst supported on titania, **characterised in that** the catalyst is prepared by dispersing titania in an ammonium metavanadate (NH₄VO₃) solution, adjusting the pH of the solution to a value of 6.8 - 7.3 by NH₄OH and HNO₃, stirring the resulting suspension for a time sufficient for complete adsorption of the vanadium compound on titania, filtering the suspension and drying and calcining the resulting catalyst compound.
